# EUROPEAN PATENT SPECIFICATION

(11) **EP 2 073 958 B1**
(45) Date of publication and mention of the grant of the patent: **21.09.2011**
(21) Application number: 07826657.4
(22) Date of filing: 05.10.2007
(51) Int. Cl.: B25H 1/00, B25H 3/00, B23D 47/02

(54) **TOOLBOX APPARATUS TO WHICH POWER TOOLS MAY BE MOUNTED TO PROVIDE A WORKSTATION**
WERKZEUGKASTENVORRICHTUNG, AN DER KRAFTBETRIEBENE WERKZEUGE ANGEBRACHT WERDEN KÖNNEN, UM EINE ARBEITSSTATION BEREITZUSTELLEN
ÉLÉMENT DE BOÎTE À OUTILS SUR LEQUEL DES OUTILS ÉLECTRIQUES PEUVENT ÊTRE MONTÉS POUR FORMER UN POSTE DE TRAVAIL

(30) Priority: 05.10.2006 US 543104
(43) Date of publication of application: 01.07.2009
(73) Proprietor: C Enterprise (HK) Limited, Hong Kong (CN)
(72) Inventor: ELSWORTHY, Christopher Thomas, Bristol BS20 0LW (GB)
(74) Representative: Martin, David John
(86) International application number: PCT/IB2007/054063
(87) International publication number: WO 2008/041206

(56) References cited:
- DE-A1- 19 915 414
- DE-U1- 20 219 120
- FR-A- 2 367 577
- GB-A- 2 407 718
- US-A- 2 767 747
- US-A- 4 252 239
- US-A- 4 405 003
- US-A- 5 697 594
- US-A1- 2003 143 041
- US-A1- 2005 241 973
- US-B1- 7 077 179
- US-B1- 7 108 459

## Description

### Technical field

The present invention relates to a toolbox apparatus to which power tools may be mounted to provide a workstation, and particularly to systems having a fixture which can be mounted to the toolbox to provide a drill press to which a portable electric drill can be mounted. Such an apparatus is known from US 7 077 179 B1.

### Background of the Invention

Combining a toolbox for organising and protecting hand tools for transport or storage, with a workstation on which work or tools may be mounted, provides a versatile system able to meet the varying needs of the home handyman and tradesman. It would be particularly advantageous however, to provide a toolbox apparatus to which a power hand drill may be mounted to provide a drill press having the functions of a conventional free-standing drill press, and to which a power cutting tool, such as a circular saw, may be mounted to provide the functions of a conventional table saw.

U.S. Patent No. 4 405 003 describes a table to which a circular saw may be mounted, and having a drill press fixture mounted to the table to receive a power hand drill. A drawback with this apparatus however, is that the fixture may only be used to provide a drill press as it possesses no features allowing it to provide any other function. The device also lacks provision such as a compartment for organising and storing the tools, the drill press fixture or other accessories when they are not in use.

It is an object of the present invention to overcome or substantially ameliorate at least one of the above disadvantages or more generally to provide an improved combination toolbox and workstation.

### Disclosure of the Invention

According to one aspect of the present invention there is provided a portable toolbox apparatus according to claim 1.

The invention thus provides a combination toolbox workstation which can be configured to provide a drill press as well as mounting another power hand cutting tool such as a saw, router, sander or the like. Preferably the adaptor fixture further comprises a mount pivotally connected to the elongate member, the carriage being mounted on the mount, and

a detent for fixing the mount to the elongate member such that the linear travel of the carriage is generally aligned with the longitudinal axis of the elongate member.

Preferably the moving jaw is spring biased to an open position wherein it is released from the toolbox. The moving jaw is preferably pivotally connected to the mount and has a face for engaging the carriage to move the jaw from its open position to a closed position for clamping to the toolbox.

A handle is preferably releasably connectable to the adaptor fixture for actuating linear sliding movement of the carriage.

Preferably a pair of substantially parallel channels are provided adjacent opposing edges of the work surface, the first and second jaws each including a protruding lug adapted to be received in a respective one of the channels.

The handle is preferably connected by first and second pins to the carriage and mount respectively, the first pin forming a pivot and the second pin being received in a slot to form a slider.

Preferably an adaptor-fixture-receiving portion of the toolbox is provided on the outside of the toolbox for receiving the adaptor fixture, the adaptor-fixture-receiving portion including fasteners for releasably fixing the adaptor fixture in place.

Preferably a cutter-receiving aperture is elongate and a pair of guide grooves are formed either side of and parallel to the cutter-receiving aperture for receiving a sliding crosscut guide.

Cases may be removably mounted to the outer walls of the sides for holding accessories.

Preferably the portable electric cutting tool is a circular saw and the cutter is a saw blade and the apparatus further includes an auxiliary guard assembly for guarding the saw blade, the guard assembly including:

a frame for receiving the saw blade, an inner guard having a through-extending slot for receiving the blade, a hinge connecting the inner guard to the frame for bevelling about a longitudinal axis parallel to a plane of the blade, an outer guard having a recess for receiving the blade, a pivot connecting the outer guard to the inner guard for rotation substantially transverse to the longitudinal axis such that the frame may be fastened between the saw and an inner face of the lid with inner and outer guards on opposing sides of the plane of the work surface.

Preferably the apparatus further includes a clamp for engaging the elongate member and holding a workpiece against the work surface, the clamp including:

a bracket having a recess of complementary shape to the elongate member;

a pair of tapered faces formed on the bracket and acutely inclined to one another;

a pair of elongate, resilient arms mutually connected at a first end of each aim, a second end of each arm received in a respective aperture in the bracket, the ends being aligned substantially coaxially to form an hinge about which the arms are pivoted,

an actuating assembly engaging both of the arms for controlling the spacing between the arms, whereby operating the actuating assembly to draw the arms together urges the second ends to engage the elongate member and urges each arm against a respective one of the tapered faces so as rotate the arms about the hinge.

Preferably the apparatus includes a mains supply cord extending from a recess in an external wall of the toolbox, the recess holding apparatus for storing the mains supply cord. Preferably the apparatus includes a battery station in a recess in an external wall of the toolbox, a transformer for providing DC power to a first electrical coupling in the battery station for supplying power to a handle module and a second coupling pair connected in series between the transformer and first electrical coupling.

This invention provides a toolbox apparatus which is effective and efficient in operational use, and which provides the versatility of a workstation. The device has an overall simple design and a multi-purpose adaptor fixture which minimizes manufacturing costs while maximising performance.

**Brief Description of the Drawings**

Preferred forms of the present invention will now be described by way of example with reference to the accompanying drawings, wherein:

Figure 1 is a pictorial view from the front of a first embodiment of the toolbox apparatus of the present invention in a closed configuration;

Figure 2 is a pictorial view the toolbox apparatus of Fig. 1 in an open configuration;

Figure 3 is a pictorial view of a power handle module of the toolbox apparatus of Fig. 1;

Figure 4 is a pictorial view from the front of a second embodiment of the toolbox apparatus of the present invention in a closed configuration;

Figure 5 is a circuit diagram for the toolbox apparatus of the present invention;

Figures 6 and 7 are pictorial views from the rear of the toolbox apparatus of Fig. 1 showing an adaptor fixture in a stored position and showing an adaptor-fixture-receiving portion respectively ;

Figures 8 and 9 are pictorial views of the toolbox apparatus of Fig. 1 showing the mounting of the adaptor fixture for use as a drill press;

Figures 10 and 11 are side elevations of the adaptor fixture configured for use as a drill press and saw fence respectively ;

Figure 12 is a pictorial view of the adaptor fixture of Figs 10 and 11;

Figure 13 is a longitudinal section through the adaptor fixture of Figs 6a and 6b;

Figures 14 and 15 are end elevations of the toolbox apparatus showing two consecutive steps in mounting the adaptor fixture for use as a saw fence;

Figure 16 is a pictorial view of a saw and auxiliary guard for mounting to the toolbox apparatus of the invention;

Figure 17 is an exploded pictorial view of the auxiliary guard of Fig. 16;

Figure 18 is a transverse cross section through the centre of the blade of the saw installed in the lid of the toolbox apparatus of the invention;

Figure 19 is a pictorial view of a work clamp of the present invention;

Figure 20 is a transverse cross section through the work clamp of Fig. 19;

Figure 21 is an alternative form of the end of the arm of the work clamp of Fig. 19, and

Figure 22 is a pictorial view of the work clamp of Fig. 19 as installed on the toolbox apparatus of the invention.

### Description of the Preferred Embodiments

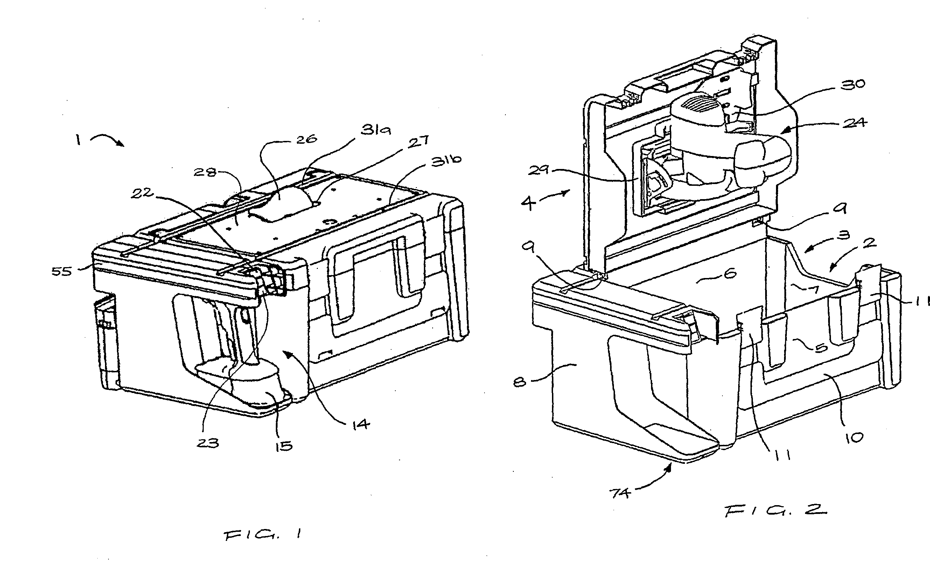

Fig. 1 and Fig. 2 show an embodiment of the toolbox apparatus 1 of the present invention in a closed and open configuration respectively. The toolbox may be any shape, but is preferably has the outline of a rectangular prism and is preferably of moulded polymer construction. The toolbox 1 includes a main compartment 2 with a generally upwardly facing opening 3 with a lid 4 for closing the opening 3. The main compartment 2 is desirably defined by a base 74 and four upstanding walls. The walls preferably include two opposed side walls 5 and 6 and two opposed end walls 7 and 8. The lid 4 is fixed along one of the side walls 6 by hinges 9. A handle 10 is attached, at approximately the centre portion of the side wall 5. In order to carry the toolbox 1 by the handle 10, the lid 4 is secured in the closed position by latching mechanisms 11. Rubber feet (not shown) are fixed to the bottom of the base 4 for ensuring a firm and stable mounting. A tray (not shown) is received in the main compartment 2 for supporting tools and allowing them to be removed readily.

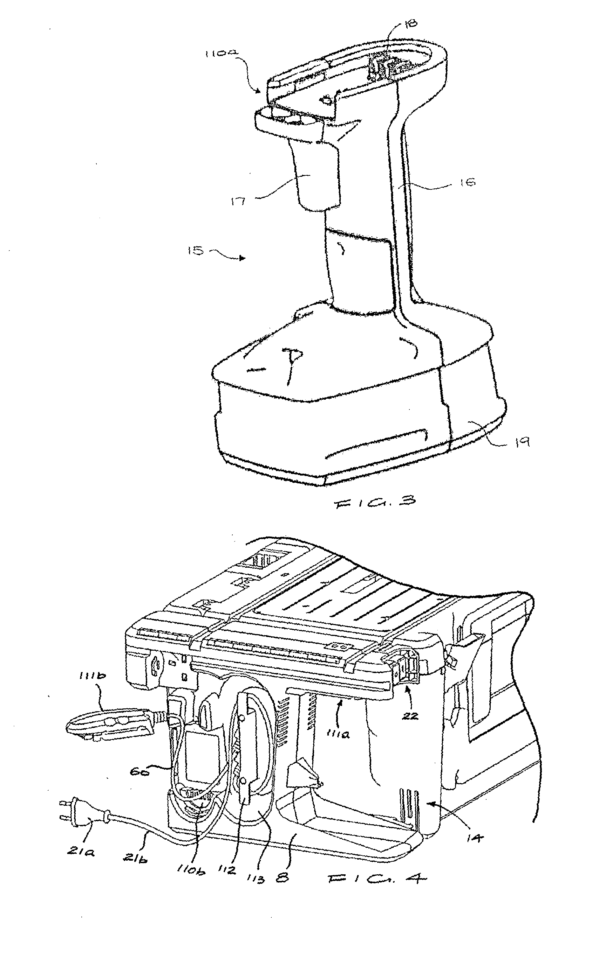

A primary battery station 14 recessed adjacent the end wall 8 is shown in Fig. 1 with a power handle module 15 mounted therein for charging. The power handle module 15 (shown separately in Fig. 3) includes an elongate portion configured to provide a hand grip 16, a trigger 17 for use by a user having his hand in place on the hand grip, a female connector 110a provided with a plurality of exposed electrical contacts 18, and a battery pack 19 holding rechargeable batteries. This power handle module is more fully described in the co-pending application entitled 'Modular powered handtool system', which is hereby incorporated by reference.

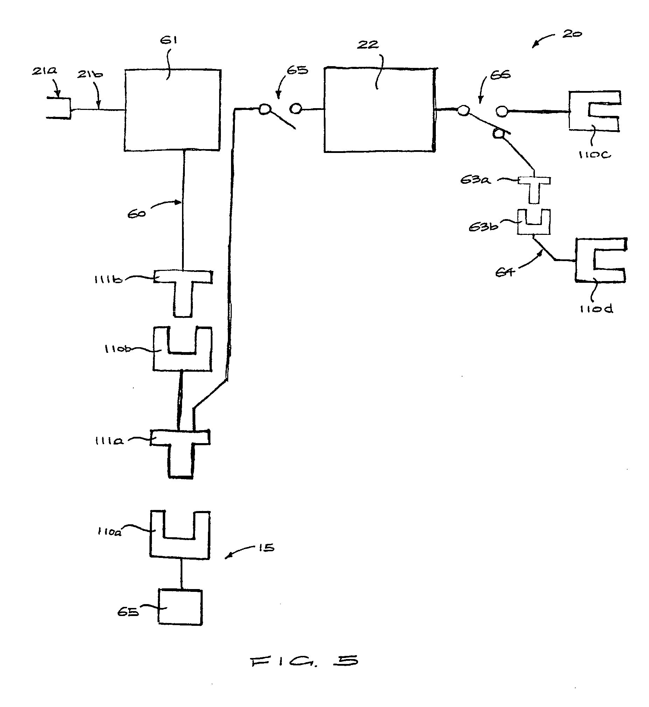

As seen in Figs 4 and 5, an electrical circuit 20 includes a power supply transformer 61 for converting mains supply to 12V DC for charging the batteries 65 of the power handle module 15. The transformer 61 is connected to mains supply electricity by the plug 21a and cord 21b. The circuit 20 includes male electrical connectors 111a, 111b complementary to the female electrical connectors 110a, 110b, 110c, 110d. A battery output cord 60 connects the male connector 111b to the transformer 61. Both the mains supply cord 21b and battery output cord 60 are mounted externally to the main compartment 2 and are stored wound about a block 112 fixed within a recess 113 in the external side of the side wall 8. A wall-mounted female connector 110b is also mounted in the recess 113 fixed to the wall 8, for receiving the connector 111b. The male connector 111a is electrically connected to the wall-mounted female connector 110b and is positioned at the top of the primary battery station 14 for engaging the female connector 110a of the power handle module 15 received in the station 14. A switch block 22 provides on/off control of the portable electric saw 24 and portable electric drill 40 (as well as other powered handtools fixed to the apparatus). Electrically coupled in series between the male connector 111a and the switch block 22 is a normally-open interlock switch 65 which is actuated by the lid 4, and is closed when the lid 4 is closed. A changeover switch 66 selectively controls the supply of current to either the connector 110c (e.g. for powering the saw 24) or the connector 110d for powering the drill 40. The default position of the changeover switch 66 provides current to the connector 110c, but when the elongate member 32 is received in an upwardly-extending aperture 33 in the wall 6, this action actuates the changeover switch 66 to supply current to the connector 110d for powering the drill 40. A plug 63a and socket 63b is provided between the switch block 22 and female connector 110c, the sockets 63b and 110c are joined by cable 64. With the connector pair 110b, 111b engaged and the power handle module 15 fixed in the station 14 engaged with the connector 111a, then current from the transformer is supplied to the power handle module 15 to charges the batteries 65. With the batteries 65 sufficiently charged either the saw 24 or drill 40 may be powered from the primary battery station 14 while the supply circuit to the connector 111a in the station 14 is broken by disconnecting the external connectors 111b, 110b allowing an additional power handle module to be connected to male connector 111b for charging.

The saw 24 is mounted to an inside face of the lid 3 and in the illustrated embodiment is a circular saw having a blade 25 and outer guard 26 extending through an elongate blade-receiving aperture 27 in the lid 3 to project above a substantially planar work surface 28 on an outer face of the lid 3. Mounted in this manner all the usual adjustments of depth and angle of cut are readily able to be made, simply by lifting the lid to access the saw 24. The inside face of the lid 3 includes a channel 29 for receiving a front part of the saw 24 and a sliding coupling 30 for releasably connecting the saw 24 to the lid 3. The coupling 30 may also mount other power cutting tools such as a scroll saw, jigsaw, router, or the like. A pair of guide grooves 31a, 31b are formed either side of and parallel to the blade-receiving aperture 27 for receiving a sliding crosscut guide (not shown) for use with the saw 24. The saw 24 includes a male electrical connector (not shown) for connection to the female connector 110c of the circuit 20.

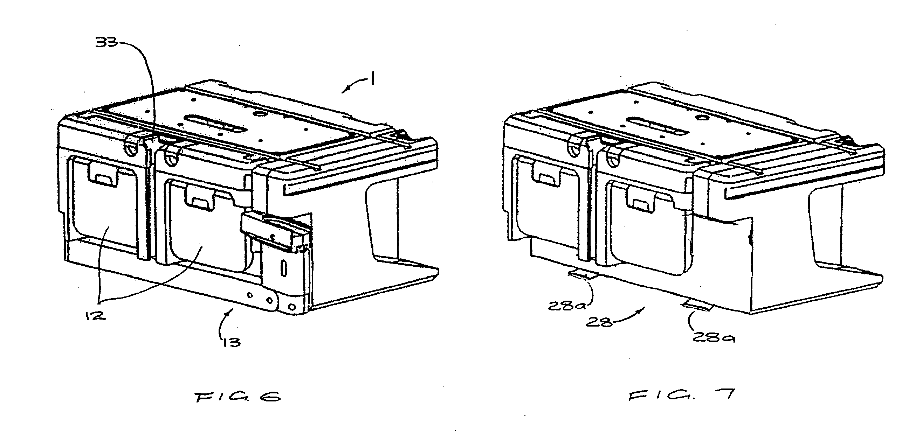

Figs 6 and 7 illustrate two accessory cases 12 and an adaptor fixture 13 which are removably attached to the outer section of the side wall 6. An adaptor-fixture-receiving portion 28 is generally L-shaped for receiving and storing the adaptor fixture 13 in an L-shaped configuration within the prismatic outline of the toolbox 1. The adaptor-fixture-receiving portion 28 may include clips 28a or like fasteners for fixing the adaptor fixture to the outside of the toolbox 1. The adaptor fixture 13 increases the versatility of the toolbox 1 and depending upon the intended use can be employed as either a drill press or a saw fence. The adaptor fixture 13 will be described in greater detail below.

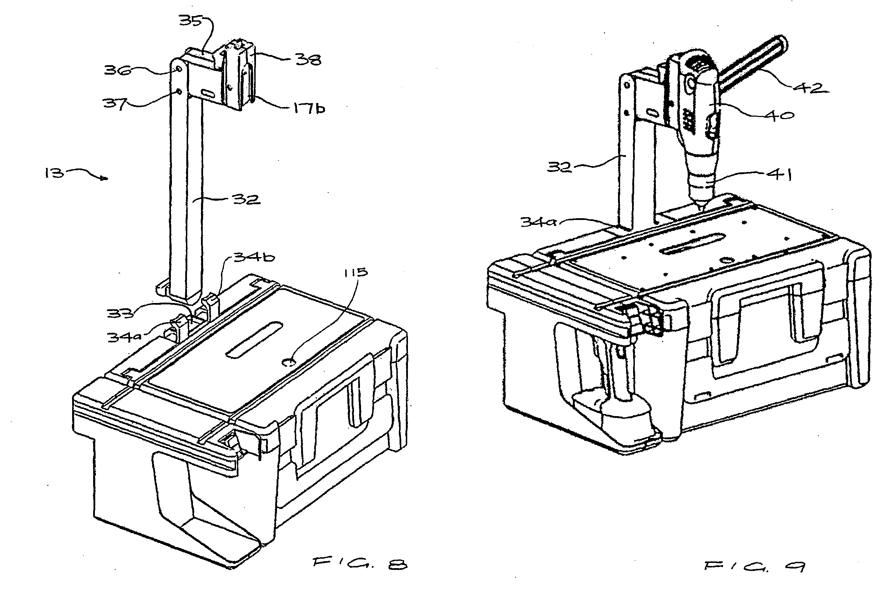

Referring to Figs 8-13, the adaptor fixture 13 includes an elongate member 32 configured to be received in an upwardly-extending aperture 33 in the wall 6. A pair of clamp levers 34a, 34b (shown released in Fig. 5a and engaged in Fig. 5b) are mounted to protrude into the aperture 33 to engage the elongate member 32, allowing the adaptor fixture 13 to be clamped in position at a variable height. The socket 63b, cable 64 and female connector 110c are fixed to the adaptor fixture 13 for supplying power to the drill 40.

A mount 35 is connected to a first end of the elongate member 32 by a pivot 36 and a detent 37 (such as a spring-loaded ball engaging a recess). A carriage 38 is mounted on the mount 35 for reciprocating linear travel relative thereto. The carriage 38 includes a second connector 111a (of like construction to the first connector 110a on the power handle module 15) for connection to a drill 40 having a motor-driven chuck 41.

The linear travel of the carriage is generally parallel to the long axis of the elongate member, the adaptor fixture 13 including a spring 110c for biasing the carriage to an upper end of its linear travel, wherefrom it is manually displaced by use of the handle 42.

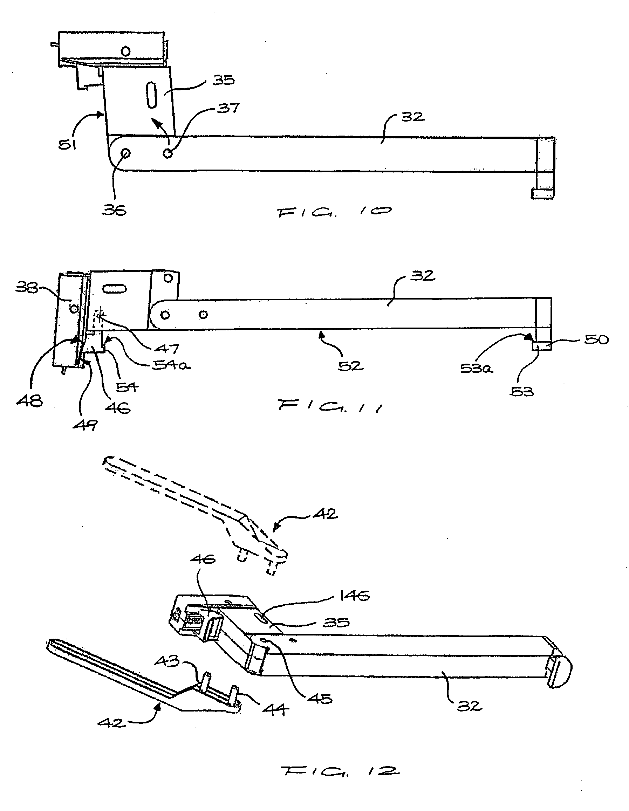

As seen in Fig. 12, the handle 42 includes first and second cylindrical and parallel pins 43, 44. A through-extending aperture 45 is provided in the carriage 38 and a through-extending slot 146 is formed in the mount 35. The first pin 43 is received in the aperture 45 forming a pivot and the second pin 44 is received in the slot 146 to form a slider. The handle 42 can be mounted to either side of the adaptor fixture 13 for left- or right-handed operation.

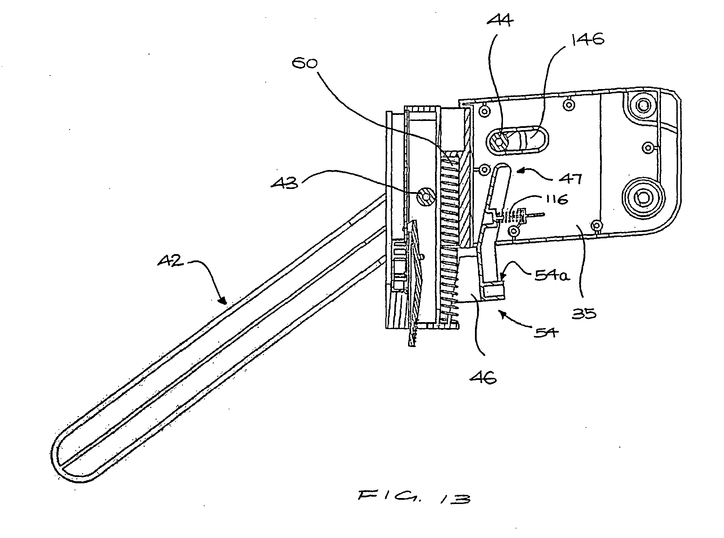

A first jaw 46 is attached at one end by a transversely extending pivot 47 to the mount 35, as best seen in Figs 11 and 13. The first jaw 46 has a face 48 held against the inclined face 49 of the carriage 38 by a spring 116 such that when actuated by the handle 42 to move the carriage 38, the jaw 46 is thereby pivoted. A second jaw 50 is fixed at second end of the elongate member 32 and includes an inwardly protruding lug 53 having a bearing surface 53a, while the first jaw 46 includes a corresponding lug 54 with a bearing surface 54a.

To convert the adaptor fixture 13 from use as a drill press (Fig. 10) to use as a fence (Fig. 11) the mount 35 is rotated about pivot 36 such that surface 51 is aligned with the inner face 52 of the elongate member 32.

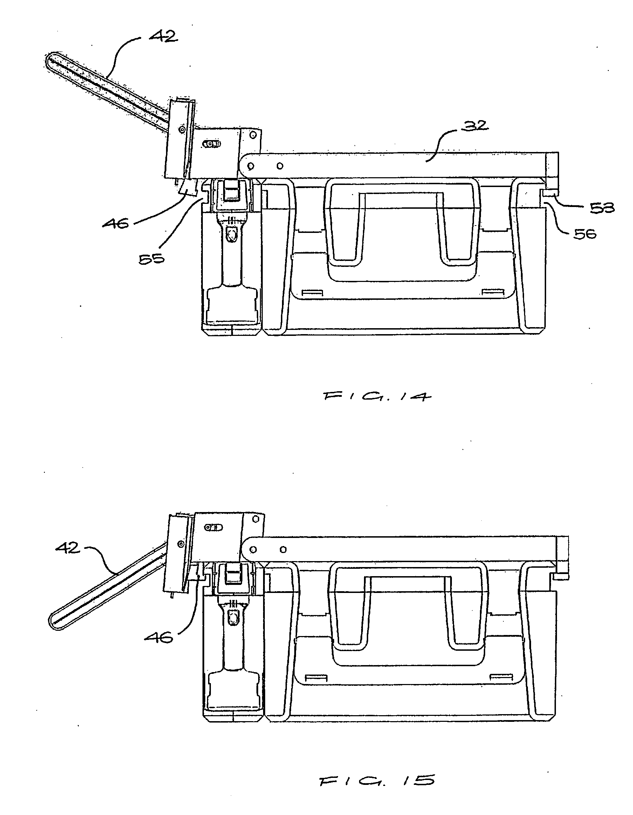

Referring to Figs 14 and 15, a pair of substantially parallel channels 55, 56 is provided in the sides 7, 8 adjacent opposing edges of the work surface 28. As shown in Fig. 7a, to clamp the adaptor fixture 13 to the toolbox 1 the lug 53 is first hooked into the channel 56. The carriage 38 is biased upward and the jaw 46 biased outward of the toolbox to its open position, allowing the inner face 52 of the elongate member to rest upon the work surface 28. When correctly positioned, by pivoting the handle 42 downward the carriage 38 is moved downward, the surfaces 48, 49 cooperating to pivot the jaw 46, thereby holding the adaptor fixture 13 in clamping engagement with the toolbox between the jaws 46, 50. In this position the elongate member 32 provides a saw fence supported on the work surface 28.

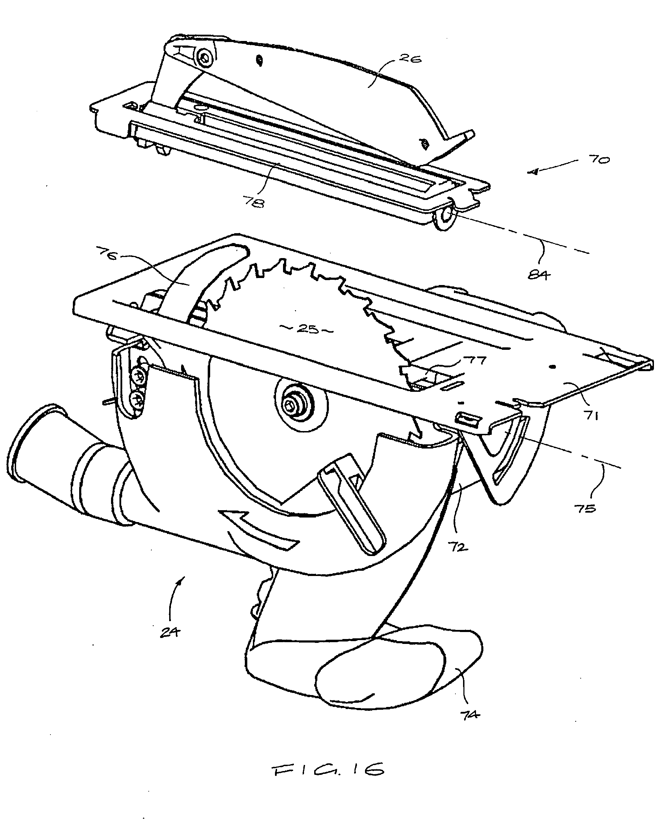

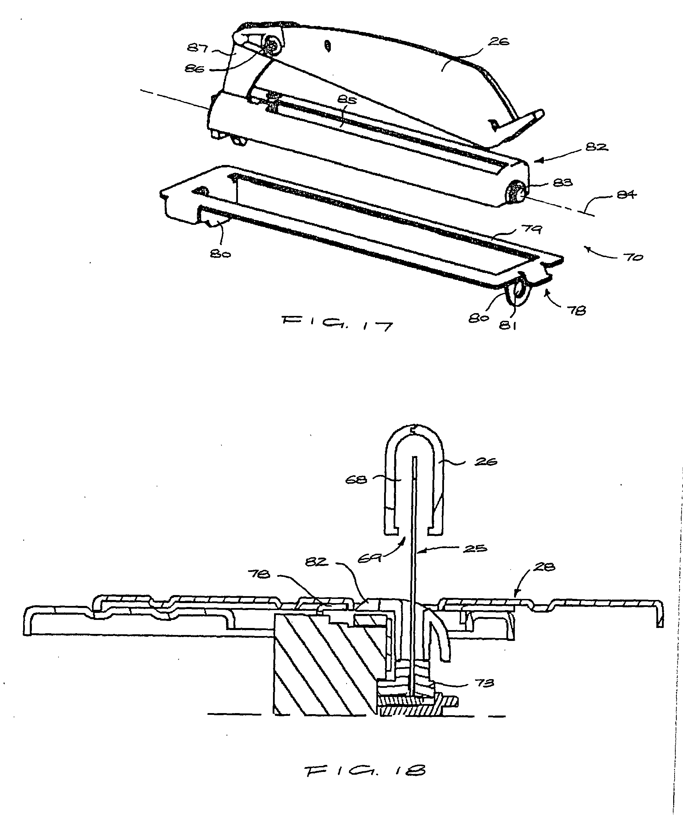

As shown in Figs 16-18, the portable circular saw 24 is provided with a housing 72 enclosing a motor (not shown), and an arbour 73 for carrying the circular saw blade 25. The housing 72 carries the main handle 74. The circular saw 24 also has a shoe 71 supporting the housing 72 in such manner so that the housing 72 can be bevelled relative to the shoe 71 about an axis 75 lying in the plane of the blade 25. In addition, the shoe 71 supports the housing 72 in a manner well known in the art so that the housing 72 can be pivoted in order to change the blade's depth of cut. A retractable guard 76 is pivoted about the arbour 73 for movement between a retracted position below the shoe 71 to an extended position in which it protrudes from the blade-receiving aperture 77 in the shoe 71 to cover the blade 25.

An auxiliary guard assembly 70 is fastened to the saw 24 when it is proposed to mount the saw 24 to the lid 3. The auxiliary guard assembly 70 includes a rectangular frame 78, an inner guard 82 and the outer guard 26. The rectangular frame 78 has flanges 80 at its longitudinally opposing ends, with coaxial circular aperture s 81 located in each flange 80. The inner guard 82 includes two shafts 83 aligned with longitudinal axis 84, each protruding from an end and received in a respective one of the apertures 81 for hingedly mounting the inner and outer guards 82, 26. A through-extending slot 85 parallel to the axis 84 extends through the inner guard 82 for receiving the blade 25. A tab 87 is connected to the inner guard 82 and extends in the plane of the blade 25, being relatively thin so that it is received in the blades kerf. The outer guard 26 is connected to the tab 87 by a pivot 86 transverse to axis 84. The outer guard 26 has a recess 68 for receiving the blade 25, the mouth 69 of the recess opening toward the slot 85. A torsion spring (not shown) urges the outer guard 26 toward the inner guard 82.

In use, the auxiliary guard assembly 70 is provided as a unit (with inner guard 82 connected to the frame 78) and the retractable blade 76 is firstly moved to its retracted position. Next, the blade 25 is fed through the slot 25 into the recess in the outer guard 26. The flanges 80 are received in the blade-receiving aperture 77 and the frame 78 extends around the blade-receiving aperture 77 abutting the outer face of the shoe 71. Detents (not shown) may be provided for fastening the guard assembly 70 to the saw 24 in this position. The outer guard 26 is then passed, from the inner side, through the blade-receiving aperture 27 in the open lid 3. The saw 24 is then fixed to the lid 3 and electrically connected to the circuit 20, before the lid is closed and secured, ready for use as a table saw. When installed in this manner the inner guard 82 substantially closes the aperture 27 in the open lid 3 and the inner guard 82 lies below the work surface 28. The inner and outer guards 82, 26 on opposing sides of the plane of the work surface 28.

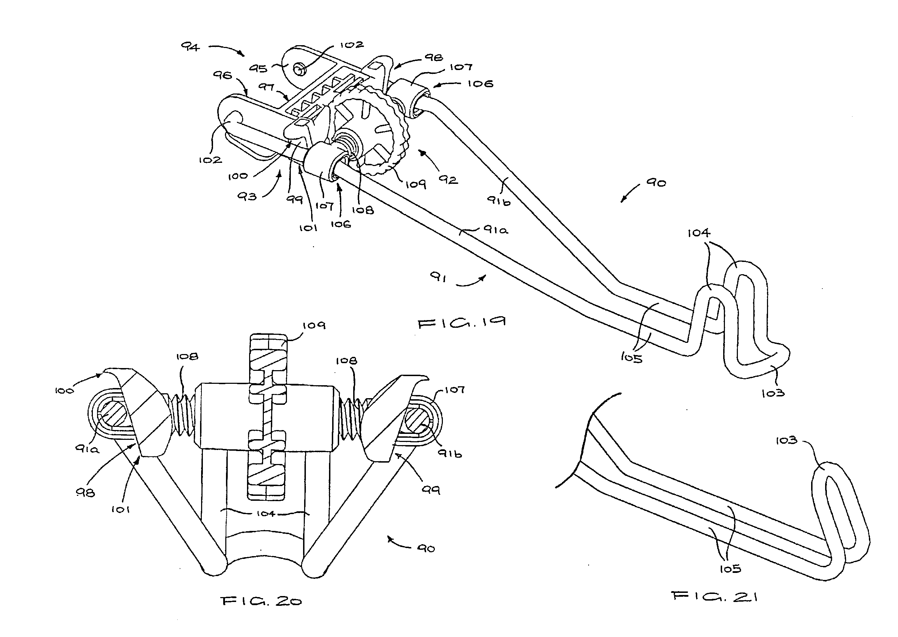

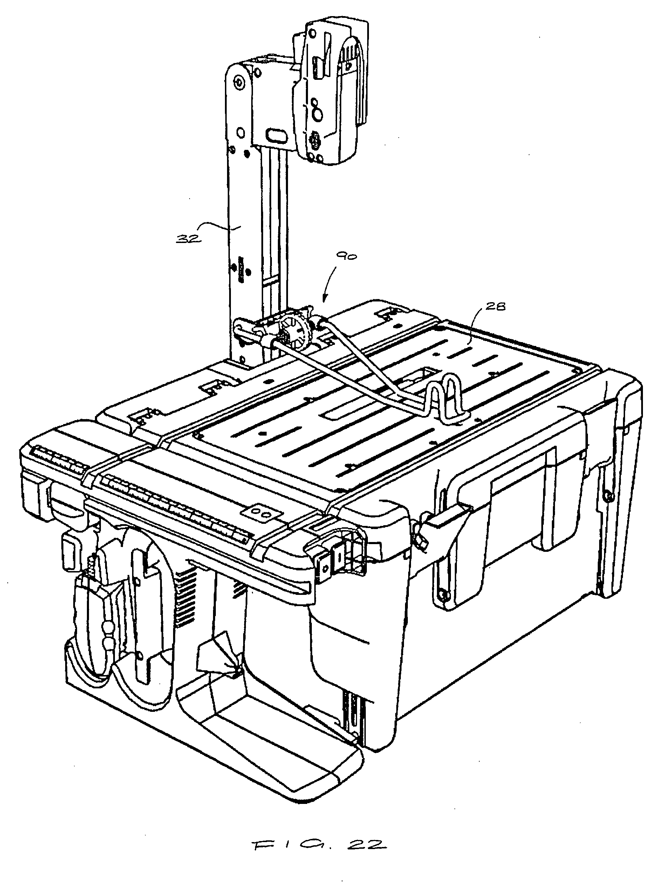

Figs 19-22 illustrate a work clamp 90 cooperating with the elongate member 32 of the adaptor fixture 13, particularly for holding a workpiece (not shown) against the work surface 28. The work clamp 90 includes a limb91, an actuating assembly 92 and a bracket 93. The bracket 93 is of moulded polymer construction and includes a recess 94 having opposing side faces 95, 96 joined by a perpendicular face 97, the faces 95-97 extending vertically in use and engaging respective complementary planar sides of the elongate member 32. Opposing tapered faces 98, 99 are disposed on the sides of the bracket 93 and are acutely inclined to one another and inclined acutely to the faces 95, 96 respectively, tapering inwardly from their top to bottom edges 100, 101. The limb 91 is formed from resilient material, such as a steel bar, and includes two integral arms 91a, 91b generally symmetrically arranged about a central plane (not shown). The inner ends 102 of each of the arms 91a, 91b are received in openings in the bracket 93 extending through the faces 95, 96. The inner ends 102 are aligned coaxially to form an hinge about which the arms 91a, 91b are pivoted. The outer ends 103 of the arms 91a, 91b are integral and adjacent the outer ends 103 each of the arms 91a, 91b includes a U-shape bend 104 positioned symmetrically either side of the central plane adjacent two linear, co-planar sections 105 of each arm. The actuating assembly 92 includes fittings 106 engaging the arm 91 and a thumb wheel 109. Each end fitting 106 includes a sleeve 107 in which one of the arms 91a, 91b are received and a threaded stem 108 engaged with a corresponding threaded portion the wheel 109. The screw threads on the stems 108 are opposite, such that rotation of the wheel 107 varies the spacing between the arms 91a, 91b. As an alternative to the two U-shape bends 104 which extend generally in longitudinal planes for guarding opposing transverse sides of a cutter, a single U-shape bend may be provided (as shown in Fig. 21) at the outer end 103. The plane of the single U-shape bend extends transversely and is inclined obliquely relative to the plane of the work surface 28.

In use, with the wheel in an open position, the elongate member 32 is entered into the recess 94. A radius or chamfer on the tips of the ends 102, combined with the resilience of the arms allows the tips to run over the outer surface of the member 32 until the face 97 abuts the member 32 and the ends 102 are then urged into respective recesses, thereby fixing the bracket 93 and providing the hinge for pivoting of the arms. Further rotation of the wheel 107 to draw the arms 91a, 91b together urges each aim 91a, 91b against a respective one of the tapered faces 98, 99 so as rotate the arms about the hinge allowing a clamping load to be applied to a workpiece supported on the work surface 28. The two bends 104 are positioned either side of an opening 115 in the lid 3 (best seen in Fig. 5a). When a router, scroll saw or jigsaw is mounted internally to the lid 3, with a cutting blade protruding through the opening 115 then the bends 104 provide a safety guard surrounding the blade.

Aspects of the present invention have been described by way of example only and it should be appreciated that modifications and additions may be made thereto without departing from the scope of the appended claims.

## Claims

1. A portable toolbox apparatus (1) to which a portable electric drill (40) and portable electric cutting tool (24) may be mounted to provide a workstation, the portable toolbox apparatus including:
a compartment (2) having a base (74) and walls (5,6,7,8) defining an opening (3);
a lid (4) for closing the opening;
an adaptor fixture (13);
a substantially planar work surface (28) on an outer-face of the lid (4);
a cutter-receiving aperture (27) in the work surface (28) for receiving a cutter (25) of the portable electric cutting tool (24) when the cutting tool is mounted to an inside face of the lid;
an electrical circuit (2) for controlling and supplying power to the cutting tool and to the portable electric drill (40); **characterized by** an aperture (33) in one of the walls; and
the adaptor fixture (13), including:
an elongate member (32) configured to be received in the aperture (33) and having first and second longitudinally opposing ends,
a carriage (38) fixed at the first end for reciprocating linear travel, the carriage having a coupling (30) for releasable connection to the drill (40),
a first jaw (46) mounted for movement relative to the first end of the elongate member (32), and
a second jaw (50) fixed at a second end of the elongate member (32),
so that when the elongate member (32) is fixed in the aperture (33) and the drill (40) is mounted to the carriage (38) above the work surface, the adaptor fixture (13) provides a drill press and when the cutting tool (24) is mounted to an inside face of the lid and the cutter of the cutting tool projects through the cutter-receiving aperture (27), the adaptor fixture is held in clamping engagement with the toolbox between the first and second jaws (46, 50) such that the elongate member provides a guide fence supported on or above the work surface.

2. The toolbox apparatus of claims 1 wherein the adaptor fixture (13) further comprises a mount (35) pivotally connected to the elongate member, the carriage (38) being mounted on the mount, and a detent for fixing the mount to the elongate member such that linear travel of the carriage is generally aligned with a longitudinal axis of the elongate member.

3. The toolbox apparatus of claim 1 or claim 2 wherein the first jaw (46) is spring biased to an open position when the first jaw is released from the toolbox.

4. The toolbox apparatus of claim 2 or claim 3 wherein the first jaw (46) is pivotally connected to the mount (35) and has a face (52) for engaging the carriage to move the jaw from its open position to a closed position for clamping to the toolbox.

5. The toolbox apparatus of any one of the preceding claims further comprising a handle (42) releasably connectable to the adaptor fixture (13) for actuating linear sliding movement of the carriage.

6. The toolbox apparatus of any one of the preceding claims including a pair of substantially parallel channels (55, 56) disposed at adjacent opposing edges of the work surface, the first and second jaws (46, 50) each including a protruding lug adapted to be received in a respective one of the channels.

7. The toolbox apparatus of claim 5 wherein the handle (42) is connected by first and second pins (43, 44) to the carriage arid mount respectively, the first pin forming a pivot and the second pin being received in a slot (146) to form a slider.

8. The toolbox apparatus of any one of the preceding claims including an adaptor-fixture-receiving portion (28) of the toolbox located on an outer side of the toolbox for receiving the adaptor fixture (13), the adaptor-fixture-receiving portion including fasteners (28a) for releasably fixing the adaptor fixture in place.

9. The toolbox apparatus of any one of the preceding claims wherein the cutter-receiving aperture (27) is elongate and a pair of guide grooves (31a, 31b) disposed either side of and parallel to the cutter-receiving aperture for receiving a sliding crosscut guide.

10. The toolbox apparatus of any one of the preceding claims including cases (12) removably mounted to the outer walls of the compartment for holding accessories.

11. The toolbox apparatus of any one of the preceding claims wherein the electrical circuit includes a station (14) for receiving a rechargeable battery and a supply connection for supplying power to the station for charging the battery.

12. The toolbox apparatus of any one of the preceding claims wherein the adaptor fixture (13) further comprise spring means (110c) for biasing the carriage to one end of the linear travel.

13. The toolbox apparatus of any one of the preceding claims wherein the portable electric cutting tool is a circular saw and the cutter is a saw blade and further including an auxiliary guard (76) assembly for guarding the saw blade, the guard assembly including:
a frame (78) for receiving the saw blade, an inner guard (82) having a through-extending slot (85) for receiving the blade, a hinge connecting the inner guard to the frame for bevelling about a longitudinal axis parallel to a plane of the blade, an outer guard (26) having a recess (68) for receiving the blade, a pivot (86) connecting the outer guard to the inner guard for rotation substantially transverse to the longitudinal axis such that the frame may be fastened between the saw and an inner face of the lid with inner and outer guards on opposing sides of the plane of the work surface.

14. The toolbox apparatus of any one of the preceding claims including a clamp (90) for engaging the elongate member and holding a workpiece against the work surface, the clamp including:
a bracket (93) having a recess (94) of complementary shape to the elongate member;
a pair of tapered faces (98, 99) formed on the bracket and acutely inclined to one another;
a pair of elongate, resilient arms (91 a, 91 b) mutually connected at a first end of each arm, a second end of each arm received in a respective aperture in the bracket, the ends being aligned substantially coaxially to form an hinge about which the arms are pivoted,
an actuating assembly (92) engaging both of the arms for controlling the spacing between the arms, whereby operating the actuating assembly to draw the arms together urges the second ends to engage the elongate member and urges each arm against a respective one of the tapered faces so as rotate the arms about the hinge.

15. The toolbox apparatus of any one of the preceding claims including a mains supply cord (21b) extending from a recess (113) in an external wall of the toolbox, the recess holding apparatus for storing the mains supply cord.

16. The toolbox apparatus of any one of the preceding claims including a battery station (14) in a recess in an external wall of the toolbox, a transformer (61) for providing DC power to a first electrical coupling (110a, 111a) in the battery station for supplying power to a handle module and a second coupling pair (110b, 111b) connected in series between the transformer and first electrical coupling.

## Patentansprüche

1. Tragbare Werkzeugkastenvorrichtung (1), an der eine tragbare elektrische Bohrmaschine (40) und ein tragbares elektrisches Schneidwerkzeug (24) angebracht werden könnten, um eine Arbeitsstation bereitzustellen, wobei die tragbare Werkzeugkastenvorrichtung umfasst:
eine Kammer (2) mit einer Basis (74) und Wänden (5, 6, 7, 8), die eine Öffnung (3) definieren;
einen Deckel (4) für das Schließen der Öffnung;
eine Adapterhalterung (13);
eine im Wesentlichen ebene Arbeitsfläche (28) auf einer Außenfläche des Deckels (4);
eine Schneidwerkzeugaufnahmeöffnung (27) in der Arbeitsfläche (28) für das Aufnehmen eines Schneidwerkes (25) des tragbaren elektrischen Schneidwerkzeuges (24), wenn das Schneidwerkzeug an einer Innenseite des Deckels angebracht ist;
einen Stromkreis (2) für das Steuern und zuführen von Strom zum Schneidwerkzeug und der tragbaren elektrischen Bohrmaschine (40); **gekennzeichnet durch** eine Öffnung (33) in einer der Wände und **dadurch**, dass die Adapterhalterung (13) umfasst:
ein längliches Element (32), das ausgebildet ist, damit es in der Öffnung (33) aufgenommen wird, und das ein erstes und zweites in Längsrichtung entgegengesetztes Ende aufweist;
einen Wagen (38), der am ersten Ende für eine hin- und hergehende lineare Bewegung befestigt ist, wobei der Wagen eine Kupplung (30) für eine lösbare Verbindung mit der Bohrmaschine (40) aufweist;
eine erste Klemmbacke (46), die für eine Bewegung relativ zum ersten Ende des länglichen Elementes (32) angebracht ist; und
eine zweite Klemmbacke (50), die an einem zweiten Ende des länglichen Elementes (32) befestigt ist;
so dass, wenn das längliche Element (32) in der Öffnung (33) befestigt ist und die Bohrmaschine (40) am Wagen (38) über der Arbeitsfläche angebracht ist, die Adapterhalterung (13) eine Säulenbohrmaschine liefert, und, wenn das Schneidwerkzeug (24) an einer Innenseite des Deckels angebracht ist und das Schneidwerk des Schneidwerkzeuges **durch** die Schneidwerkzeugaufnallmeöffnung (27) ragt, die Adapterhalterung in einem Klemmeingriff mit dem Werkzeugkasten zwischen der ersten und zweiten Klemmbacke (46, 50) gehalten wird, so dass das längliche Element ein Führungsgitter liefert, das auf oder über der Arbeitsfläche getragen wird.

2. Werkzeugkastenvorrichtung nach Anspruch 1, bei der die Adapterhalterung (13) außerdem aufweist: eine Befestigungsvorrichtung (35), die drehbar mit dem länglichen Element verbunden ist, wobei der Wagen (38) an der Befestigungsvorrichtung angebracht ist; und eine Arretierung für das Befestigen der Befestigungsvorrichtung am länglichen Element, so dass die lineare Bewegung des Wagens im Allgemeinen mit der Längsachse des länglichen Elementes ausgerichtet ist.

3. Werkzeugkastenvorrichtung nach Anspruch 1 oder Anspruch 2, bei der die erste Klemmbacke (46) in eine offene Position federbelastet wird, wenn die erste Klemmbacke vom Werkzeugkasten freigegeben wird.

4. Werkzeugkastenvorrichtung nach Anspruch 2 oder Anspruch 3, bei der die erste Klemmbacke (46) drehbar mit der Befestigungsvorrichtung (35) verbunden ist und eine Fläche (52) für einen Eingriff mit dem Wagen aufweist, um die Klemmbacke aus ihrer offenen Position in eine geschlossene Position für das Festklemmen des Werkzeugkastens zu bewegen.

5. Werkzeugkastenvorrichtung nach einem der vorhergehenden Ansprüche, die außerdem einen Griff (42), der lösbar mit der Adapterhalterung (13) verbunden werden kann, für das Betätigen der linearen Gleitbewegung des Wagens aufweist.

6. Werkzeugkastenvorrichtung nach einem der vorhergehenden Ansprüche, die ein Paar von im Wesentlichen parallelen Kanälen (55, 56) umfasst, die an benachbarten entgegengesetzten Rändern der Arbeitsfläche angeordnet sind, wobei die erste und zweite Klemmbacke (46, 50) jeweils einen vorstehenden Ansatz umfasst, der so ausgebildet ist, dass er in einem jeweiligen der Kanäle aufgenommen wird.

7. Werkzeugkastenvorrichtung nach Anspruch 5, bei der der Griff (42) mittels eines ersten und zweiten Bolzens (43, 44) jeweils mit dem Wagen und der Befestigungsvorrichtung verbunden ist, wobei der erste Bolzen eine Drehachse bildet, und wobei der zweite Bolzen in einem Schlitz (146) aufgenommen wird, um einen Schieber zu bilden.

8. Werkzeugkastenvorrichtung nach einem der vorhergehenden Ansprüche, die einen Aufnahmeabschnitt (28) für die Adapterhalterung des Werkzeugkastens umfasst, der auf einer Außenseite des Werkzeugkastens für das Aufnehmen der Adapterhalterung (13) angeordnet ist, wobei der Aufnahmeabschnitt für die Adapterhalterung Befestigungselemente (28a) für das lösbare Befestigen der Adapterhalterung an Ort und Stelle umfasst.

9. Werkzeugkastenvorrichtung nach einem der vorhergehenden Ansprüche, bei der die Schneidwerkzeugaufnahmeöffnung (27) länglich ist und ein Paar Führungsnuten (31 a, 31b) auf beiden Seiten der und parallel zur Schneidwerkzeugaufnahmeöffnung für das Aufnehmen einer verschiebbaren Querschnittführung angeordnet ist.

10. Werkzeugkastenvorrichtung nach einem der vorhergehenden Ansprüche, die Kästen (12) umfasst, die entfernbar an den Außenwänden der Kammer für das Halten von Zubehör angebracht sind.

11. Werkzeugkastenvorrichtung nach einem der vorhergehenden Ansprüche, bei der der Stromkreis eine Station (14) für das Aufnehmen einer wiederaufladbaren Batterie und einen Versorgungsanschluss für die Zuführung von Strom zur Station für das Aufladen der Batterie umfasst.

12. Werkzeugkastenvorrichtung nach einem der vorhergehenden Ansprüche, bei der die Adapterhalterung (13) außerdem eine Federeinrichtung (110c) für das Vorspannen des Wagens an einem Ende der linearen Bewegung aufweist.

13. Werkzeugkastenvorrichtung nach einem der vorhergehenden Ansprüche, bei der das tragbare elektrische Schneidwerkzeug eine Kreissäge und das Schneidwerk ein Sägeblatt sind, und die außerdem eine Hilfsschutzbaugruppe (76) für das Schützen des Sägeblattes umfasst, wobei die Schutzbaugruppe umfasst:
einen Rahmen (78) für das Aufnehmen des Sägeblattes; einen inneren Schutz (82), der einen sich durchgängig erstreckenden Schlitz (85) für das Aufnehmen des Blattes aufweist; ein Gelenk, das den inneren Schutz mit dem Rahmen für ein Schrägstellen um eine Längsachse parallel zu einer Ebene des Blattes verbindet; einen äußeren Schutz (26) mit einer Aussparung (68) für das Aufnehmen des Blattes; eine Drehachse (86), die den äußeren Schutz mit dem inneren Schutz für eine Drehung im Wesentlichen quer zur Längsachse verbindet, so dass der Rahmen zwischen der Säge und einer Innenseite des Deckels mit dem inneren und äußeren Schutz auf entgegengesetzten Seiten der Ebene der Arbeitsfläche befestigt werden kann.

14. Werkzeugkastenvorrichtung nach einem der vorhergehenden Ansprüche, die eine Klemmvorrichtung (90) für einen Eingriff mit dem länglichen Element und das Halten eines Werkstückes gegen die Arbeitsfläche umfasst, wobei die Klemmvorrichtung umfasst:
einen Halter (93) mit einer Aussparung (94) mit einer zum länglichen Element komplementären Form;
ein Paar konische Flächen (98, 99), die am Halter ausgebildet und zueinander unter spitzem Winkel geneigt sind;
ein Paar längliche, elastische Arme (91a, 91b), die gegenseitig an einem ersten Ende eines jeden Arms verbunden sind, wobei ein zweites Ende eines jeden Arms in einer jeweiligen Öffnung im Halter aufgenommen wird, wobei die Enden im Wesentlichen koaxial ausgerichtet sind, um ein Gelenk zu bilden, um das die Arme gedreht werden;
eine Setätigungsbaugruppe (92), die beide Arme für das Steuern des Abstandes zwischen den Armen in Eingriff bringt, wodurch das Betätigen der Betätigungsbaugruppe, um die Arme zusammenzuziehen, die zweiten Enden dazu treibt, mit dem länglichen Element in Eingriff zu kommen, und einen jeden Arm gegen eine jeweilige der konischen Flächen treibt, um so die Arme um das Gelenk zu drehen.

15. Werkzeugkastenvorrichtung nach einem der vorhergehenden Ansprüche, die ein Netzanschlusskabel (21 b) umfasst, das sich von einer Aussparung (113) in einer Außenwand des Werkzeugkastens erstreckt, wobei die Aussparung die Vorrichtung für das Aufbewahren des Netzanschlusskabels hält.

16. Werkzeugkastenvornchtung nach einem der vorhergehenden Ansprüche, die umfasst: eine Batteriestation (14) in einer Aussparung in einer Außenwand des Werkzeugkastens; einen Transformator (61) für das Liefern von Gleichstrom zu einer ersten elektrischen Kopplung (110a, 111a) in der Batteriestation für das Zuführen von Strom zu einem Griffmodul; und ein zweites Kopplungspaar (110b, 111b), das in Reihe zwischen dem Transformator und der ersten elektrischen Kopplung geschaltet ist.

## Revendications

1. Dispositif de boîte à outils portatif (1), sur lequel peuvent être montés une perceuse électrique portative (40) et un outil de coupe électrique portatif (24) pour établir une station de travail, le dispositif de boîte à outils portatif englobant:
un compartiment (2) comportant une base (74) et des parois (5, 6, 7, 8) définissant une ouverture (3) ;
un couvercle (4) pour fermer l'ouverture ;
un bâti d'adaptation (13) ;
une surface de travail pratiquement plane (28) sur une face externe du couvercle (4) ;
une ouverture de réception de l'élément de coupe (27) dans la surface de travail (28), pour recevoir un élément de coupe (25) de l'outil de coupe électrique portatif (24) lorsque l'outil de coupe est monté sur une face interne du couvercle ;
un circuit électrique (2) pour assurer le contrôle et l'alimentation en énergie de l'outil de coupe et de la perceuse électrique portative (40), **caractérisé par** une ouverture (33) dans l'une des parois et en ce que le montagne d'adpatation (13) englobe:
un élément allongé (32), configuré de sorte à être reçu dans l'ouverture (33) et comportant des première et deuxième extrémités longitudinalement opposées ;
un chariot (38) fixé au niveau de la première extrémité pour effectuer un déplacement linéaire alternatif, le chariot comportant un couplage (30) permettant une connexion amovible à la perceuse (40) ;
une première mâchoire (46) montée de sorte à pouvoir se déplacer par rapport à la première extrémité de l'élément allongé (32) ; et
une deuxième mâchoire (50), fixée au niveau d'une deuxième extrémité de l'élément allongé (32),
de sorte que lorsque l'élément allongé (32) est fixé dans l'ouverture (33), la perceuse (40) étant montée sur le chariot (38) au-dessus de la surface de travail, le bâti d'adaptation (13) établit une perceuse à colonne, et lorsque l'outil de coupe (24) est monté sur une face interne du couvercle, l'élément de coupe de l'outil de coupe débordant à travers l'ouverture de réception de l'outil de coupe (27), le bâti d'adaptation est maintenu dans un engagement à serrage dans la boîte à outils entre les première et deuxième mâchoires (46, 50), l'élément allongé établissant ainsi une barrière de guidage supportée sur la surface de travail ou au-dessus de celle-ci.

2. Dispositif de boîte à outils selon la revendication 1, dans lequel le bâti d'adaptation (13) comprend en outre un support (35), connecté de manière pivotante à l'élément allongé, le chariot (38) étant monté sur le support, et un cliquet pour fixer le support sur l'élément allongé, de sorte que le déplacement linéaire du chariot est généralement aligné avec un axe longitudinal de l'élément allongé.

3. Dispositif de boîte à outils selon les revendications 1 ou 2, dans lequel la première mâchoire (46) est poussée par ressort vers une position ouverte lorsque la première mâchoire est dégagée de la boîte à outils.

4. Dispositif de boîte à outils selon les revendications 2 ou 3, dans lequel la première mâchoire (46) est connectée de manière pivotante au support (35) et comporte une face (52) destinée à s'engager dans le chariot, pour déplacer la mâchoire de sa position ouverte vers une position fermée, en vue d'un serrage sur la boîte à outils.

5. Dispositif de boite à outils selon l'une quelconque des revendications précédentes, comprenant en outre une poignée (42), pouvant être connectée de manière amovible au bâti d'adpatation (13) pour actionner le déplacement linéaire coulissant du chariot.

6. Dispositif de boîte à outils selon l'une quelconque des revendications précédentes, englobant une paire de canaux pratiquement parallèles (55, 56) agencés au niveau de bords adjacents opposés de la surface de travail, les première et deuxième mâchoires (46, 50) englobant chacune une patte en saillie adaptée pour être reçue dans un canal respectif des canaux.

7. Dispositif de boîte à outils selon la revendication 5, dans lequel la poignée (42) est connectée respectivement par des première et deuxième goupilles (43, 44) au chariot et au support, la première goupille formant un pivot et la deuxième goupille étant reçue dans une fente (146) pour former un coulisseau.

8. Dispositif de boîte à outils selon l'une quelconque des revendications précédentes, englobant une partie de réception du bâti d'adaptation (28) de la boîte à outils, agencée sur un côté externe de la boîte à outils, pour recevoir le bâti d'adaptation (13), la partie de réception du bâti d'adaptation englobant des éléments de fixation (28a) pour fixer de manière amovible le bâti d'adaptation dans sa position.

9. Dispositif de boîte à outils selon l'une quelconque des revendications précédentes, dans lequel l'ouverture de réception de l'élément de coupe (27) est allongée, une paire de rainures de guidage (31a, 31b) étant agencée de chaque côté de l'ouverture de réception de l'élément de coupe et de manière parallèle à celle-ci, pour recevoir un guide coulissant de coupe transversale.

10. Dispositif de boîte à outils selon l'une quelconque des revendications précédentes, englobant des cases (12) montées de manière amovible sur les creux externes du compartiment pour contenir des accessoires.

11. Dispositif de boîte à outils selon l'une quelconque des revendications précédentes, dans lequel le circuit électrique englobe une station (14) pour recevoir une batterie rechargeable et une connexion d'alimentation pour assurer l'alimentation en énergie de la station afin de charger la batterie.

12. Dispositif de boîte à outils selon l'une quelconque des revendications précédentes, dans lequel le bâti d'adaptation (13) comprend en outre un moyen de ressort (110c) pour pousser le chariot vers une extrémité du déplacement linéaire.

13. Dispositif de boîte à outils selon l'une quelconque des revendications précédentes, dans lequel l'outil de coupe électrique portatif est une scie circulaire, l'élément de coupe étant une lame de scie, et englobant en outre un assemblage de protection auxiliaire (76) pour protéger la lame de scie, l'assemblage de protection englobant:
un cadre (78) pour recevoir la lame de scie, un protecteur interne (82) comportant une fente le traversant (85), pour recevoir la lame, une charnière connectant le protecteur interne au cadre en vue d'un chanfreinage autour d'un axe longitudinal parallèle à un plan de la lame, un protecteur externe (26) comportant un évidement (68) pour recevoir la lame, un pivot (86) connectant le protecteur externe au protecteur interne en vue d'une rotation pratiquement transversale par rapport à l'axe longitudinal, de sorte que le cadre peut être fixé entre la scie et une face interne du couvercle, les protecteurs interne et externe étant agencés sur les côtés opposés du plan de la surface de travail.

14. Dispositif de boîte à outils selon l'une quelconque des revendications précédentes, englobant une bride de serrage (90) destinée à s'engager dans l'élément allongé et à retenir une pièce contre la surface de travail, la bride de serrage englobant:
une console (93), comportant un évidement (94) ayant une forme complémentaire de l'élément allongé ;
une paire de faces effilées (98, 99) formées sur la console et inclinées de manière aiguë l'une par rapport à l'autre ;
une paire de bras élastiques allongés (91a, 91b), connectés mutuellement au niveau d'une première extrémité de chaque bras, une deuxième extrémité de chaque bras étant reçue dans une ouverture respective dans la console, les extrémités étant alignées de manière pratiquement coaxiale pour former une charnière autour de laquelle sont pivotés les bras ;
un assemblage d'actionnement (92) s'engageant dans les deux bras pour contrôler l'espacement entre les bras, entraînant ainsi l'assemblage d'actionnement à rapprocher les bras par traction, poussant les deuxièmes extrémités à s'engager dans l'élément allongé et poussant chaque bras contre une face respective des faces effilées, de sorte à faire tourner les bras autour de la charnière.

15. Dispositif de boîte à outils selon l'une quelconque des revendications précédentes, englobant un câble d'alimentation du réseau (21b) s'étendant à partir d'un évidement (113) dans une paroi externe de la boîte à outils, l'évidement contenant un dispositif pour ranger le câble d'alimentation du réseau.

16. Dispositif de boîte à outils selon l'une quelconque des revendications précédentes, englobant une station de batterie (14) dans un évidement dans une paroi externe de la boîte à outils, un transformateur (61) pour assurer l'alimentation en courant continu d'un premier couplage électrique (110a, 111a) dans la station de batterie, pour alimenter en énergie un module de poignée, et une deuxième paire de couplages (110b, 111b) connectés en série entre le transformateur et le premier couplage électrique.
